# EUROPEAN PATENT SPECIFICATION

(11) **EP 4 001 674 B1**
(45) Date of publication and mention of the grant of the patent: **25.06.2025**
(21) Application number: 21204319.4
(22) Date of filing: 22.10.2021
(51) Int. Cl.: F16B 13/00, F16B 25/00, F16B 1/00

(54) **A SUPPORT MOUNT AND METHOD THEREOF**
HALTERUNG UND VERFAHREN DAFÜR
MONTURE DE SUPPORT ET PROCÉDÉ ASSOCIÉ

(30) Priority: 17.11.2020 EP 20208005
(43) Date of publication of application: 25.05.2022
(73) Proprietor: Illinois Tool Works, Inc., Glenview, Illinois 60025 (US)
(72) Inventor: PERRIER, Matthieu, Glenview, 60025 (US); MARASCO, Jean-Paul, Glenview, 60025 (US); SIMONIN, Jean Luc, Glenview, 60025 (US); COUVREUR, Jerome, Glenview, 60025 (US)
(74) Representative: HGF

(56) References cited:
- DE-U1- 202010 016 602
- JP-U- S5 234 357
- US-A1- 2009 320 407
- INSOFAST: "How to install drywall to the InSoFast Panel.", 2 December 2011 (2011-12-02), XP055911938, Retrieved from the Internet <URL:https://www.youtube.com/watch?v=NNJ6RHRRFMs&list=PLHUAK78BxshZsgsBMSTiuCqyL2Ee4RQA7&t=29s> [retrieved on 20220412]

## Description

The present invention relates to a fastener for mounting a drywall structure to a surface, in particular for mounting drywall sheet to a metal structure. A method of fixing a drywall structure to a metal structure is also disclosed.

### Introduction

Drywall structures are known as means to fabricate a wall during building construction. Installation of drywall structures produces wall- or ceiling surfaces more quickly than traditional lath and plaster. As used herein, the term drywall structure includes sheets, panels or boards in the form of plasterboard, wallboard, sheet rock, buster board, custard board, as well as, boarding or panels formed from gyprock or gypsum.

Drywall structures are typically installed by fixing the drywall structure to a surface, e.g. a metal surface of a support frame, using appropriate fasteners, such as, for example, screws or fixings. Here, each fastener is driven from the outer surface of the drywall structure through and into the metal surface of the support frame (or any other support surface). To ensure efficiency, as well as, integrity of the finished wall, a drywall structure normally extends over the entire height of a room (i.e. between the floor and the ceiling), and a series of drywall panels are lined up to cover the entire wall or ceiling surface.

Earlier patent application DE 20 2010 016602 U1 describes a magnetic dowel designed for hanging iron objects on "Wedi" panels, and an online video available at https://www.youtube.com/watch?v=NNJ6RHRRFMs shows how to install drywall to an "InSoFast" panel.

Typically, during installation of the drywall structures, a panel is held in a fixing position to the support surface by at least one first installer, while a second installer drives the fasteners into the panels and support surface. In particular, when the drywall structure forms a wall, panels have to be positioned and held vertically and slightly spaced above the floor of the room by one or more installers, wherein, when the drywall structure forms a ceiling, panels have to be positioned and held horizontally overhead by one or more installers.

Also, drywall panels can be relatively large and cumbersome, so handling the drywall structures can be difficult to coordinate. For example, when a drywall panel is held in a fixing position by a first installer, at least one second installer is required to drive a requisite number of fasteners through the panel and into the support surface (e.g. metal strut or metal frame). Further, holding a large panel in steady a precise position can be tiring and unsafe, because the installer holding the panel may fatigue and the panel may fall over.

Consequently, with currently know methods and tools, it is difficult to ensure accurate positioning, because each drywall panel (of many) is typically held manually by an installer to then be manoeuvred into the correct fixing position. Further, the installation process requires continuous coordinating between the at least two installers, thus, making the installation laborious and time consuming.

It is therefore an object of the present invention to provide an apparatus, as well as, a method for enabling installation of drywall structures in a convenient and safe manner. In particular, it is an object of the invention to provide both, an apparatus and a method that can be utilised by single installer to install drywall structures safely and more efficiently.

A further object of the invention is to provide an apparatus, as well as, a method that provides for an improved accuracy when positioning and fixing drywall panels on a surface.

### Summary of the Invention

According to a first aspect of the invention, there is provided a self-drilling support mount for a drywall structure according to claim 1, comprising:
a substantially cylindrical body having a flanged head portion at a proximal end and an externally threaded anchor portion extending away from said flanged head portion along a longitudinal centre axis of said cylindrical body towards a distal end,
wherein said flanged head portion comprises at least one magnetic attachment member adapted to slidably movably attach said support mount to a metal structure when said flanged head portion is in contact with the drywall structure, and having a substantially annular shape with an axial opening therethrough.

Preferably, said at least one magnetic attachment member may be provided at an outer surface of said flanged head portion.

This provides the advantage that drywall panels can be easily equipped with an interim support mount allowing a single installer to simply drive the support mounts into the drywall panel at suitable locations, to then simply attach (via the magnets) the drywall panel to a metal frame structure and slidably move the panel into the correct fixing position on the metal frame structure without the need of any help from at least one second installer. Thus, the drywall panel can be installed quicker and more accurately, with a reduced risk of the drywall panel accidentally falling down during installation.

Suitably, said magnetic attachment member may be embeddingly coupled to said flanged head portion, so as to be flush with said outer surface of said flanged head portion.

This provides the advantage of a relatively inconspicuous interim support mount when secured to the drywall structure, so that the panel can be fixed to the metal frame the same way as it would be possible without a support mount secured to the drywall panel, i.e. without causing any gapping between the drywall panel and the support structure.

Suitably, said magnetic attachment member may be replaceably mounted to said flanged head portion.

In this way, the fastener may be conveniently and cost effectively repaired should the magnetic attachment member become damaged or lost.

Advantageously, said outer surface of said flanged head portion may include an axial recess forming an inset drive screw socket configured for screwing the self-drilling support mount onto said drywall structure. Suitably, said magnetic attachment member may be arranged coaxial with said axial recess.

This provides the advantage that standard magnetic attachment members can be utilised with (i.e. attached to) the support mount without interfering with the provided screw socket. For example, different style screw sockets may be used when manufacturing the support mount, but the same magnetic attachment member can be used.

Alternatively, said magnetic attachment member may be a separate washer configured to be operably coupled with said substantially cylindrical body of said support mount. This provides the advantage of using a simple washer construction that can be coupled with the support mount so as to provide a magnetic field strong enough the attach the support mount and drywall structure to the metal surface. In use, the magnetic attachment member is "wedged in" between the flanged head portion and the drywall surface, wherein, the flanged head portion and magnetic washer are preferably embedded (i.e. "sunk") into the drywall so as to provide the outer surface of the flanged head portion flush with the outer surface of the drywall , when installed.

Advantageously, said anchor portion may be configured to be rotatably driven into the drywall structure so as to stoppingly engage said flanged head portion with the drywall structure.

This provides the advantage that the fastener can only be rotatably driven into the drywall structure to a predetermined depth, thus, preventing possible damage to the drywall by fasteners going in too deep or through the drywall. A suitably dimensioned support mount may therefore be selected according to the thickness of the drywall structure with which it will be used, so that the anchor portion can be driven fully into the drywall structure without protruding through to the opposing surface.

According to a further aspect of the invention, there is provided a method of fixing a drywall structure to a metal structure according to claim 9, including the steps of:
(a) providing at least one self-drilling support mount according to the first aspect of the invention;
(b) rotatably driving an anchor portion of said at least one self-drilling support mount into the drywall structure until a flanged head portion stoppingly engages with the drywall structure;
(c) engaging a magnetic attachment member of said at least one self-drilling support mount fastened to the drywall structure with a metal structure so as to selectively slidably movably attach the drywall structure to the metal support structure;
(d) slidably moving the drywall structure into a desired fixing position relative to the metal structure;
(e) inserting at least one fastener through the drywall structure and into the metal structure so as to secure the drywall structure to the metal structure.

### Brief Description of the Drawings

Embodiments of the invention are now described, by way of example only, hereinafter with reference to the accompanying drawings, in which:
- **Figure 1**: shows (a) an upper perspective view, (b) a perspective top view, and (c) an angled perspective view of an example support mount according to an aspect of the invention;
- **Figure 2**: shows a perspective view of the example support mount of Figure 1 mounted to a drywall structure;
- **Figure 3**: shows a cross-sectional view of the example support mount of Figure 2 positioned for engagement with a metal structure;
- **Figure 4**: shows a cross-sectional view of the example support mount of Figure 2 engaged with a metal structure (dotted lines illustrate the magnetic field within the metal structure);
- **Figure 5**: shows a perspective view of a user (installer) fastening a drywall structure, including interim support mounts as shown in the example of Figure 2, to a metal structure (e.g. a metal frame), and
- **Figure 6**: shows a process diagram of the method of fixing a drywall structure to a metal structure according a further aspect of the invention.

In the drawings, like reference numerals refer to like parts.

### Detailed Description

Certain terminology is used in the following description for convenience only and is not limiting. The words 'upper', and 'downward' designate directions in the drawings to which reference is made and are with respect to the described component. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'fixed', 'attached', 'coupled', 'engaged' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, 'first', 'second', etc. merely indicate that different instances of like objects are being referred to and are not intended to imply that the objects so described must be in a given sequence, either temporally, spatially, in ranking or in any other manner.

Also, the terms 'panel', 'sheet' and 'structure' are used interchangeably for the drywall structure.

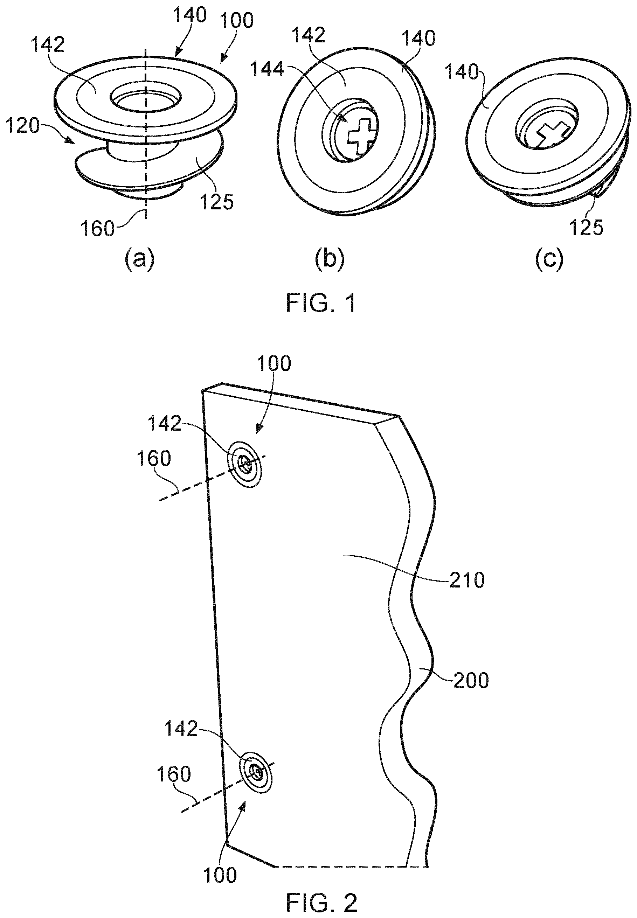

Referring now to Figure 1, a support mount 100 for a drywall structure has a substantially cylindrical body including a flanged head portion 140 at a proximal end (proximal relative to the user when installing the fastener), and an anchor portion 120 extending away from the flanged head portion 140 towards a distal end. The anchor portion 120 extends in the direction along a longitudinal axis 160 and is provided with an external thread 125. The flanged head portion 140 includes a magnetic attachment member 142 provided at the head portion 140 so as to be flush with an outer surface and operably face away from the distal end. The magnetic attachment member 142 is adapted to slidably movably attach to any suitable metal structure when fastened to the drywall structure, i.e. the magnetic force is sufficient to hold (in combination with the other magnetic attachment members 142 from other mounts 100) the drywall panel securely attached to the metal support frame while allowing the installer to shift (or slide) the drywall panel on the metal surface.

The anchor portion 120 includes a cylindrical outer surface onto which is provided the external thread 125. The external thread 125 extends from the flanged head portion 140 to the distal end of the anchor portion 120. The outer thread 125 is configured to allow a user to rotatably drive the support mount 100 into a drywall structure.

The flanged head portion 140 includes an upper surface extending radially from the longitudinal axis 160. An axial recess 144 is provided into the head portion 140, extending in a direction towards the distal tip of the anchor portion 120. In this particular example, the axial recess 144 is coaxially in line with the tubular body of the anchor portion 120. At the base of the axial recess 144 there is formed a drive screw socket configured to receive a suitable screwdriver tool (not shown). This enables the user / installer to rotate the support mount 100 in order to drive the threaded anchor portion 120 into the drywall panel.

The magnetic attachment member 142 of the example shown in Figure 1 is annular with an axial opening therethrough. The magnetic attachment member 142 is embedded into the flanged head portion 140 so that the magnetic attachment member's upper face sits flush with the upper surface of the flanged head portion 140. The axial opening of the magnetic attachment member 142 is coaxial with the axial recess 144 and sized so that the inner wall of the axial opening forms an upper portion of the axial recess 144.

The external thread 125 is provided as a wide blade coarse thread, so that the support mount 100 is self-drilling. In other words, the external thread 125 is configured so that, in use, the external thread 125 is able to excavate an orifice within a drywall structure 200 (see Figure 2) into which the anchor portion 120 is driven by a user. More particularly, the external thread 125 is configured in such a way that, with the distal end of the anchor portion 120 engaged with the surface of a drywall structure 200, when a user rotates and applies downward pressure to the support mount 100, then the external thread 125 punctures through the surface (e.g. 210). Continued rotation and downward pressure by the user causes the outer thread 125 to simultaneously excavate an orifice in the drywall structure 200 and fasteningly drive the support mount 100 therein. The anchor portion 120 is then driven into the surface (e.g. 210) until the flanged head portion 140 stoppingly engages with the outer surface (e.g. 210) of the drywall structure 200.

Referring now to Figure 2, there is shown a portion of the drywall structure 200 including a first and second support mount 100, each one rotatably driven through a first surface 210 into the panel structure 200 in the manner described previously. Each support mount 100 is fixed with its longitudinal axis 160 substantially orthogonal to the first surface 210. Furthermore, each support mount 100 is fixed so that the upper surface of the flanged head portion 140 is flush with the first surface 210 of the drywall structure 200. Each magnetic attachment member 142 is thus positioned substantially flush and in parallel with the first surface 210.

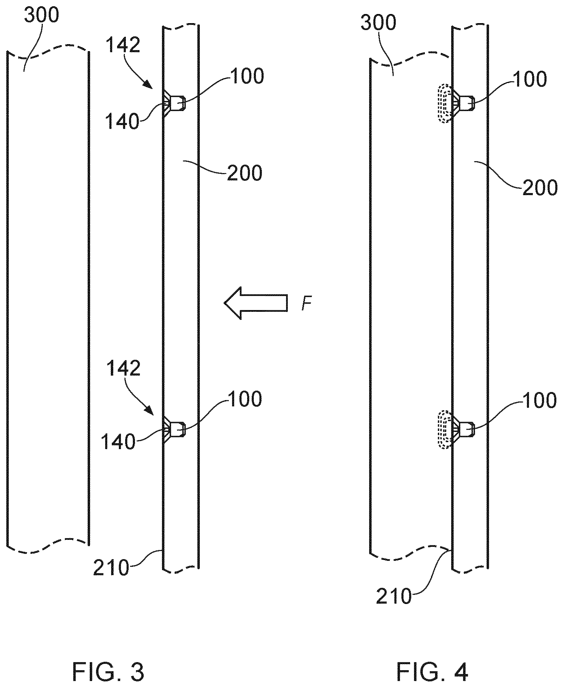

Preferably, the support mount 100 has an axial length that is less than the thickness of the drywall structure 200. In this way, when the support mount 100 is fixed to the drywall structure 200, the anchor portion 120 resides wholly within the body of the drywall structure 200 (see Figures 3 and 4, described below)and the distal tip does not protrude through the drywall structure 200.

Figures 3 to 4 show cross-sectional side views of the drywall structure 200 with two embedded support mounts 100 before and after attachment to a metal structure 300 (e.g. a metal frame). The metal structure 300 may be a part of a larger frame which forms a support for multiple drywall structures in order to fabricate the internal wall or ceiling of a building.

During use, the drywall structure 200 is simply positioned so that the first surface 210 and embedded support mounts 100 are facing the metal structure 300. In this position, the drywall structure 200 is ready for magnetic attachment to the metal structure 300. The drywall structure 200 may be positioned by an installer with only approximate alignment relative to a fixing position. The magnetic attachment members 142 of respective support mounts 100 are then brought into engagement with the metal structure 300 by the installer moving the drywall structure 200 in the general direction indicated by the arrow ***F*.** Each magnetic attachment member 142 engages the metal structure 300 so as to attach the drywall structure 200 to the metal structure 300, as shown in Figure 4.

The attracting force to the metal structure 300 provided by of the magnetic attachment members 142 is sufficient to at least temporarily fix the drywall structure 200 to the metal structure 300. That is, the drywall structure 200 is attached and held on the metal structure 300 by the support mounts 100 without additional support, for example, from an installer.

At this point, the installer will be able to slidably move the drywall structure 200 relative to the metal structure 300 without detachment from the metal structure 300. The support mounts 100 remain engaged with the metal structure 300 as the drywall structure 200 is moved over the surface of the metal structure 300 into a desired fixing position.

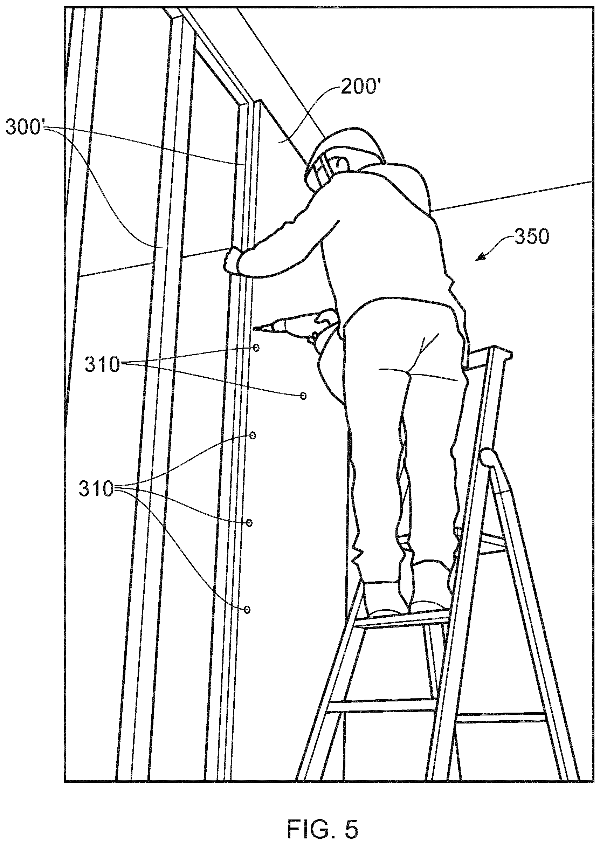

Figure 5 shows an example illustration of an installer 350 fixing a drywall structure 200' to a metal structure 300'. The drywall structure 200' is shown aligned in the desired fixing position. The drywall structure 200' is secured to the metal structure 300' using suitable screw fasteners 310 inserted through said drywall structure 200' and into the metal structure 300'. The screw fasteners 310 may be any suitable fastener configured to screw through the drywall structure 200' and into the metal frame structure 300'. By securing the drywall structure 200' to the metal structure 300' the drywall structure is rendered immobile relative to the metal structure 300'.

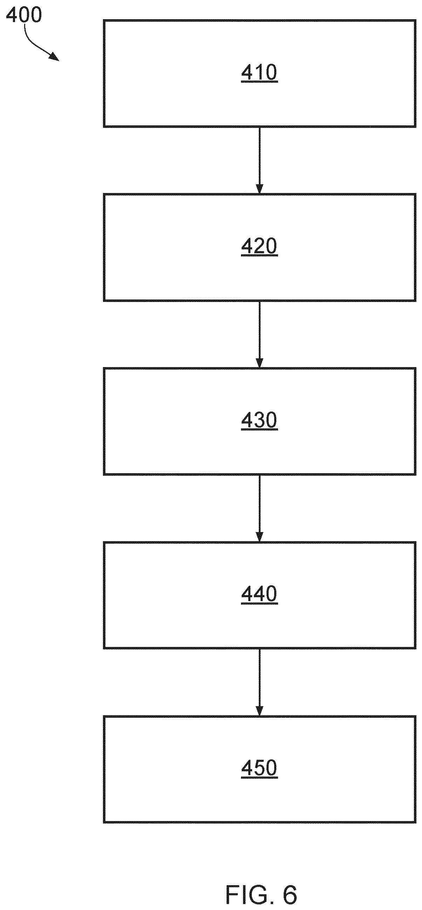

Figure 6 shows a flow chart of an example method 400 suitable for fixing the drywall structure 200 to the metal structure 300. The method 400 starts by providing 410 at least one (but preferably one or more for each corner of the drywall panel 200) self-drilling interim support mount 100, such as the support mount 100 described with reference to Figures 1 to 5. The anchor portion 120 of the support mount 100 is then rotatably driven 420 into the drywall structure 200 until the flanged head portion 140 of the support mount 100 stoppingly engages with the drywall structure 200.

The magnetic attachment member of the support mount 100 is then engaged 430 with the metal frame structure 300 so as to attach the drywall structure 200 to the metal frame structure 300. The drywall structure 200 is then moved (slid) into a desired fixing position (if required) 440. A fastener (e.g. a suitable screw fastener) is then inserted 450 through the drywall structure 200 (in positions not coinciding with the embedded support mounts 100) and into the metal structure 300, thereby, securing the drywall structure 200 to the metal frame structure 300.

It will be appreciated by persons skilled in the art that the above embodiments have been described by way of example only and not in any limitative sense, and that various alterations and modifications are possible without departing from the scope of the invention as defined by the appended claims. Various modifications to the examples described above are possible, for example variations may exist in the number, shape, size, arrangement or assembly of the support mount.

In certain embodiments, the magnetic attachment member is arranged to directly contact the metal structure when brought into engagement. Alternatively, a cover may be provided on the magnetic attachment member in order to provide protection. The cover may be, for example, a thermoplastic coating.

In certain embodiments, the flanged head portion, including the magnetic attachment member or any cover thereon, may include a reduced friction element. For example, a surface or portion of a surface that engages with the metal structure may be modified through suitable etching, patterning, embossing, debossing or a spark finish. Alternatively, the cover itself may be formed from, or contain a proportion of, low friction material such as PTFE or similar.

In certain embodiments, the flanged head portion 140 of the support mount 100 engages and couples a magnetic attachment member 142 to the drywall structure 200. For example, the support mount 100 may couple a magnetic strip or washer to the drywall structure 200 as it is driven into the drywall structure 200. The magnetic attachment member 142 thus movably slidably attaches the drywall structure 200 to the metal structure 300 in the same manner as a magnetic attachment member of a flanged head portion.

Furthermore, the magnetic attachment member may simply be provided as a washer configured to operably couple with the thread and head portion of the support mount. Thus, the magnetic washer may simply be slid over the thread portion into contact with a lower surface of the flanged head portion and then embedded into the drywall structure. Preferably, the material used for the flanged head portion is suitable to promote the magnetic field of the washer so as to attach the support mount to a metal surface during use.

In certain embodiments, a method of fixing the drywall structure to a metal structure may include a user engaging a plurality of support mounts 100 to a drywall structure 200 and attaching a proportion of the plurality of support mounts 100 to the metal surface to slidably movably attach the drywall structure relative to the metal structure 300. In this way, a corresponding proportion of support mounts 100 may be disengaged from the metal structure 300 as it is moved to its desired fixing position. The disengaged support mounts 100 may then be attached to the metal structure before more permanent fasteners are inserted.

In certain embodiments, an alternative method may include the user temporarily attaching several drywall structures to a metal structure using respective support mounts 100, then slidably moving each drywall structure 200 relative to the metal structure 300 to a respective fixing position. Once each drywall structure 200 is in its respective fixing position then at least one fastener is inserted into each drywall structure 200, thereby securing each drywall structure 200 to the metal structure 300 in their respective fixing position.

## Claims

1. A self-drilling support mount (100) for a drywall structure (200), comprising:
a substantially cylindrical body having a flanged head portion (140) at a proximal end and an externally threaded anchor portion (125) extending away from said flanged head portion along a longitudinal centre axis (160) of said cylindrical body towards a distal end,
wherein said flanged head portion (140) comprises at least one magnetic attachment member (142) adapted to slidably movably attach said support mount (100) to a metal structure when said flanged head portion is in contact with the drywall structure,
**characterised in that** said at least one magnetic attachment member (142) has a substantially annular shape with an axial opening therethrough.

2. A self-drilling support mount according to claim 1, wherein said magnetic attachment member (142) is provided at an outer surface of said flanged head portion.

3. A self-drilling support mount according to any one of the preceding claims, wherein said magnetic attachment member (142) is embeddingly coupled to said flanged head portion, so as to be flush with said outer surface of said flanged head portion..

4. A self-drilling support mount (100) according to any one of the preceding claims, wherein said magnetic attachment member (142) is replaceably mounted to said flanged head portion (140).

5. A self-drilling support mount (100) according to any one of claims 2 to 4, wherein said outer surface of said flanged head portion comprises an axial recess forming an inset drive screw socket allowing to screw the self-drilling support mount onto said drywall structure (200).

6. A self-drilling support mount according to claim 5, wherein said magnetic attachment member is arranged coaxial with said axial recess.

7. A self-drilling support mount according to claim 1, wherein said magnetic attachment member is a washer configured to be operably coupled with said substantially cylindrical body of said support mount.

8. A self-drilling support mount according to any one of the preceding claims, wherein said anchor portion (120) is configured to be rotatably driven into the drywall structure (200) so as to stoppingly engage said flanged head portion with the drywall structure.

9. A method of fixing a drywall structure to a metal structure comprising the steps of:
(a) providing at least one self-drilling support mount according to any one of the preceding claims;
(b) rotatably driving an anchor portion of said at least one self-drilling support mount into the drywall structure until a flanged head portion stoppingly engages with the drywall structure;
(c) engaging a magnetic attachment member of said at least one self-drilling support mount fastened to the drywall structure with a metal structure, so as to selectively slidably movably attach the drywall structure to the metal support structure;
(d) slidably moving the drywall structure into a desired fixing position relative to the metal structure;
(e) inserting at least one fastener through the drywall structure and into the metal structure, so as to secure the drywall structure to the metal structure.

## Patentansprüche

1. Selbstbohrende Stützhalterung (100) für eine Trockenbaustruktur (200), aufweisend:
einen im Wesentlichen zylindrischen Körper, der einen Flanschkopfabschnitt (140) an einem proximalen Ende und einen mit Außengewinde versehenen Ankerabschnitt (125), der sich von dem Flanschkopfabschnitt weg entlang einer Längsmittelachse (160) des zylindrischen Körpers zu einem distalen Ende erstreckt, aufweist,
wobei der Flanschkopfabschnitt (140) mindestens ein magnetisches Befestigungselement (142) aufweist, das dazu ausgelegt ist, die Stützhalterung (100) gleitend bewegbar an einer Metallstruktur zu befestigen, wenn der Flanschkopfabschnitt in Kontakt mit der Trockenbaustruktur ist,
**dadurch gekennzeichnet, dass** das mindestens eine magnetische Befestigungselement (142) eine im Wesentlichen ringförmige Form mit einer axialen Öffnung dadurch aufweist.

2. Selbstbohrende Stützhalterung nach Anspruch 1, wobei das magnetische Befestigungselement (142) an einer Außenfläche des Flanschkopfabschnitts vorgesehen ist.

3. Selbstbohrende Stützhalterung nach einem der vorhergehenden Ansprüche, wobei das magnetische Befestigungselement (142) in eingebetteter Form derart mit dem Flanschkopfabschnitt gekoppelt ist, dass es mit der Außenfläche des Flanschkopfabschnitts bündig ist.

4. Selbstbohrende Stützhalterung (100) nach einem der vorhergehenden Ansprüche, wobei das magnetische Befestigungselement (142) austauschbar an dem Flanschkopfabschnitt (140) angebracht ist.

5. Selbstbohrende Stützhalterung (100) nach einem der Ansprüche 2 bis 4, wobei die Außenfläche des Flanschkopfabschnitts eine axiale Ausnehmung aufweist, die eine Einsatz-Antriebsschraubenbuchse bildet, die es ermöglicht, die selbstbohrende Stützhalterung auf die Trockenbaustruktur (200) zu schrauben.

6. Selbstbohrende Stützhalterung nach Anspruch 5, wobei das magnetische Befestigungselement koaxial zu der axialen Ausnehmung angeordnet ist.

7. Selbstbohrende Stützhalterung nach Anspruch 1, wobei das magnetische Befestigungselement eine Unterlegscheibe ist, die eingerichtet ist, mit dem im Wesentlichen zylindrischen Körper der Stützhalterung funktionell gekoppelt zu werden.

8. Selbstbohrende Stützhalterung nach einem der vorhergehenden Ansprüche, wobei der Ankerabschnitt (120) eingerichtet ist, rotatorisch in die Trockenbaustruktur (200) eingetrieben zu werden, um den Flanschkopfabschnitt mit der Trockenbaustruktur sperrend in Eingriff zu bringen.

9. Verfahren zum Befestigen einer Trockenbaustruktur an einer Metallstruktur, die folgenden Schritte aufweisend:
(a) Bereitstellen mindestens einer selbstbohrenden Stützhalterung nach einem der vorhergehenden Ansprüche;
(b) rotatorisches Eintreiben eines Ankerabschnitts der mindestens einen selbstbohrenden Stützhalterung in die Trockenbaustruktur, bis ein Flanschkopfabschnitt mit der Trockenbaustruktur sperrend in Eingriff tritt;
(c) Ineingriffbringen eines magnetischen Befestigungselements der mindestens einen an der Trockenbaustruktur befestigten selbstbohrenden Stützhalterung mit einer Metallstruktur, um die Trockenbaustruktur selektiv gleitend bewegbar an der Metallträgerstruktur zu befestigen;
(d) gleitendes Bewegen der Trockenbaustruktur in eine gewünschte Befestigungsposition relativ zu der Metallstruktur;
(e) Einführen mindestens eines Befestigungselements durch die Trockenbaustruktur und in die Metallstruktur, um die Trockenbaustruktur an der Metallstruktur zu befestigen.

## Revendications

1. Monture de support auto-perçante (100) pour une structure de cloison sèche (200), comprenant :
un corps sensiblement cylindrique ayant une partie tête à bride (140) à une extrémité proximale et une partie ancrage à filetage extérieur (125) s'étendant en éloignement de ladite partie tête à bride le long d'un axe central longitudinal (160) dudit corps cylindrique vers une extrémité distale,
dans laquelle ladite partie tête à bride (140) comprend au moins un élément de fixation magnétique (142) adapté pour fixer de manière mobile coulissante ladite monture de support (100) à une structure métallique lorsque ladite partie tête à bride est en contact avec la structure de cloison sèche,
**caractérisée en ce que** ledit au moins un élément de fixation magnétique (142) a une forme sensiblement annulaire avec une ouverture axiale à travers celui-ci.

2. Monture de support auto-perçante selon la revendication 1, dans laquelle ledit élément de fixation magnétique (142) est prévu au niveau d'une surface externe de ladite partie tête à bride.

3. Monture de support auto-perçante selon l'une quelconque des revendications précédentes, dans laquelle ledit élément de fixation magnétique (142) est accouplé de manière noyée à ladite partie tête à bride, de manière à être de niveau avec ladite surface externe de ladite partie tête à bride.

4. Monture de support auto-perçante (100) selon l'une quelconque des revendications précédentes, dans laquelle ledit élément de fixation magnétique (142) est monté remplaçable sur ladite partie tête à bride (140).

5. Monture de support auto-perçante (100) selon l'une quelconque des revendications 2 à 4, dans laquelle ladite surface externe de ladite partie tête à bride comprend un évidement axial formant une cuvette de clou-vis incrustée rapportée permettant de visser la monture de support auto-perçante sur ladite structure de cloison sèche (200).

6. Monture de support auto-perçante selon la revendication 5, dans laquelle ledit élément de fixation magnétique est agencé coaxialement avec ledit évidement axial.

7. Monture de support auto-perçante selon la revendication 1, dans laquelle ledit élément de fixation magnétique est une rondelle configurée pour être accouplée fonctionnellement audit corps sensiblement cylindrique de ladite monture de support.

8. Monture de support auto-perçante selon l'une quelconque des revendications précédentes, dans laquelle ladite partie ancrage (120) est configurée pour être entraînée en rotation dans la structure de cloison sèche (200) de manière à mettre en prise avec arrêt ladite partie tête à bride avec la structure de cloison sèche.

9. Procédé de fixation d'une structure de cloison sèche à une structure métallique comprenant les étapes consistant à :
(a) fournir l'au moins une monture de support auto-perçante selon l'une quelconque des revendications précédentes ;
(b) entraîner en rotation une partie ancrage de ladite au moins une monture de support auto-perçante dans la structure de cloison sèche jusqu'à ce qu'une partie tête à bride vienne en prise avec arrêt avec la structure de cloison sèche ;
(c) mettre en prise un élément de fixation magnétique de ladite au moins un monture de support auto-perçante assujettie sur la structure de cloison sèche avec une structure métallique, de manière à sélectivement fixer de manière mobile coulissante la structure de cloison sèche à la structure de support métallique ;
(d) déplacer par coulissement la structure de cloison sèche jusque dans une position de fixation souhaitée par rapport à la structure métallique ;
(e) insérer l'au moins un élément d'assujettissement à travers la structure de cloison sèche et jusque dans la structure métallique, de manière à assujettir la structure de cloison sèche sur la structure métallique.
